# EUROPEAN PATENT APPLICATION

(11) **EP 1 530 395 A2**
(43) Date of publication of application: **11.05.2005**
(21) Application number: 04025424.5
(22) Date of filing: 26.10.2004
(51) Int. Cl.: H04Q 7/38

(54) **Paging technique to support point-to-multipoint (P-T-M) data transmissions**

(30) Priority: 07.11.2003 US 517907 P; 08.11.2003 KR 2003078891
(71) Applicant: LG ELECTRONICS INC., Seoul (KR)
(72) Inventor: Lee, Young-Dae, Hanam Gyeonggi-do (KR); Yi, Seung-June, 1641-3,Seocho 1-dong Seocho-Gu Seoul (KR); Chun, Sung Duck, Gwanak-Gu Seoul (KR)
(74) Representative: von Hellfeld, Axel, Dr. Dipl.-Phys.

(57) **Abstract**

A paging technique comprising periodically monitoring a point-to-point (p-t-p) paging indication on a first channel for each p-t-p service paging cycle, periodically monitoring a point-to-multipoint (p-t-m) paging indication on a second channel for each p-t-m service paging cycle, and decoding the first and second channels at different time intervals with the same channel code to receive the p-t-p paging indication and the p-t-m paging indication, wherein an unused part of a paging indicator channel (PICH) frame is used for a time interval for the second channel.

## Description

### FIELD OF THE INVENTION

The present invention relates to wireless (radio) communications, and in particular, to a paging technique to support point-to-multipoint (p-t-m) data transmissions.

### BACKGROUND AND SUMMARY

The present invention relates to transmission and reception of paging information for a multimedia multicast and broadcast service (MBMS) in a UMTS (Universal Mobile Telecommunications System), which is a European type IMT-2000 system, and in particular, to periodically transmitting and receiving paging information that is specific to multicast and broadcast services according to time intervals dedicated to the multicast and broadcast services.

The UMTS (Universal Mobile Telecommunications System) is a third generation mobile communications system that evolved from the European GSM (Global System for Mobile Communications) system, with the purpose of providing further improved mobile communications service based upon a GSM core network and W-CDMA (Wideband Code Division Multiple Access) technology.

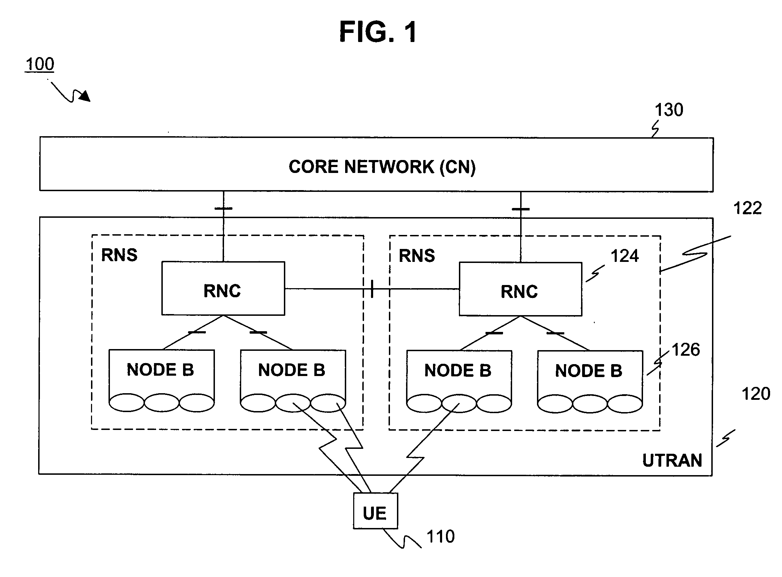

Figure 1 depicts a typical UMTS network (100) architecture. The UMTS broadly consists of user equipment (UE 110), a UMTS Terrestrial Radio Access Network (UTRAN 120), and a core network (CN 130). The UTRAN consists of one or more radio network sub-systems (RNS 122), and each RNS consists of one radio network controller (RNC 124) and one or more base stations (Node Bs 126) that are managed by the RNC. The Node B, being managed by the RNC, receives data sent from a physical layer of the UE via the uplink and transmits data to the UE via the downlink, to thus act as an access point of the UTRAN with respect to the UE. The RNC handles the allocation and management of radio resources, and acts as an access point with the CN.

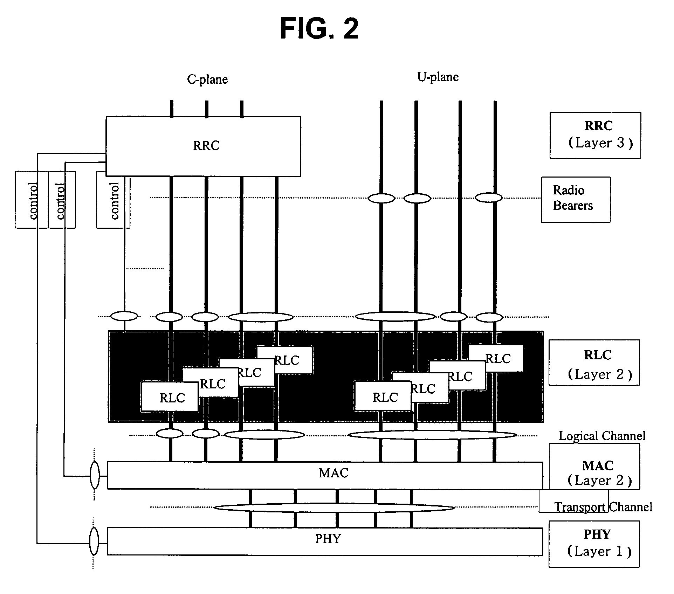

Figure 2 depicts a radio interface protocol architecture based upon a 3GPP radio access network specification between the UE and the UTRAN. The radio interface protocol of Figure 2 is divided horizontally into a physical layer, a data link layer, and a network layer, and is divided vertically into a user plane for data transmissions and a control plane for transfer of control signaling. Namely, the user plane is the region in which traffic information of the user (such as voice, IP (Internet Protocol) packets and the like) is transferred, while the control plane is the region in which control information (such as the interface of the network, maintaining and managing calls, and the like) is transferred. The protocol layers of Figure 2 may be divided into a first layer (L1), a second layer (L2), and a third layer (L3) based upon the lower three layers of an open system interconnection (OSI) model that is a well-known in communications systems.

The first layer (L1) is a physical layer (PHY) that uses a physical channel to provide information transfer service to upper layers. The physical layer is connected to a medium access control (MAC) layer that is located thereabove via a transport channel through which data travels between the MAC layer and the physical layer. Also, between different physical layers, namely, between the respective physical layers at the transmitting end and the receiving end, data travels through a physical channel.

The MAC layer of the second layer (L2) provides service to an upper layer, i.e., the radio link control (RLC) layer, via a logical channel. The RLC layer of the second layer (L2) supports the transmission of reliable data and can perform the functions of segmentation and concatenation for RLC service data units (SDU) received from an upper layer.

The radio resource control (RRC) layer located at the lowest portion of the third layer (L3) is only defined in the control plane, and handles the controlling of transport channels and physical channels with respect to the establishment, re-establishment, and releasing of radio bearers (RB). The RB refers to a service provided by the second layer (L2) for transferring data between a UE and the UTRAN. In general, an RB being established refers to providing the characteristics of the protocol layers and channels required in providing a particular service, and refers to the procedures of establishing each particular parameter and operating method.

When the RRC layer of a particular UE and the RRC layer of the UTRAN are connected to allow messages to be transferred therebetween, that particular UE is said to be in RRC connected state, while the UE is said to be in idle state when there is no connection. A UE in RRC connected state is further divided into a URA_PCH state, a CELL_PCH state, a CELL_FACH state, and a CELL_DCH state. For those UEs in idle state, in URA_PCH state, or in CELL_PCH state, a discontinuous reception (DRX) method is employed to minimize power consumption by discontinuously receiving a SCCPCH (Secondary Common Control Physical Channel) to which a PICH (Paging Indicator Channel) and a PCH (Paging Channel) are mapped. During the time periods other than for receiving the PICH or the SCCPCH, the UE is in sleeping mode state.

In the related art, the UE performing the DRX (discontinuous reception) method wakes up at every CN domain specific DRX cycle length or UTRAN specific DRX cycle length to receive a UE specific paging indicator (PI) of the PICH. The related art UE specific PI is used in order to notify a particular UE that a paging message for the particular UE will be transmitted via the PCH.

The PICH is divided into pitch frames having a length of 10 ms, and a single pitch frame is comprised of 300 bits. The 288 bits in the front portion of the PICH frame are used for the UE specific PICH, and more than one UE specific PI are transmitted. The 12 bits at the end of the PICH frame are not transmitted. For convenience, the 288-bit front portion of the PICH is defined as the "UE PICH," while the 12-bit rear portion is defined as the "PICH Unused Part."

Hereafter, Multimedia Broadcast/Multicast Service (MBMS or "MBMS service") will be described. MBMS refers to a method of providing streaming or background services to a plurality of UEs by using a downlink dedicated MBMS bearer service. The cell to which MBMS is provided must support the logical channels of MCCH (MBMS Control Channel) and MTCH (MBMS Traffic Channel). The MCCH is a point-to-multipoint downlink channel providing a service that transmits MBMS control information to the UEs. The MTCH is a point-to-multipoint downlink channel providing a service that transmits MBMS data to the UEs. The MCCH is used and shared by various MBMS services being provided to one cell. The MTCH is configured for each and every MBMS service provided to one cell. The MCCH and MTCH are mapped to a transport channel (FACH), which is mapped to a physical channel (SCCPCH).

A MBMS UE wishing to receive MBMS, first receives MBMS control information via the MCCH of one cell, and then receives MBMS data via the MTCH. Here, each MBMS UE in idle state, URA_PCH state, or CELL_PCH state, wakes up once at each DRX cycle length and receives a MBMS specific paging indicator (i.e., a MBMS PI) via the PICH. The related art provides two types of techniques for receiving a MBMS PI by a MBMS UE, according to the definition of the DRX cycle length being used and the definition of the PICH.

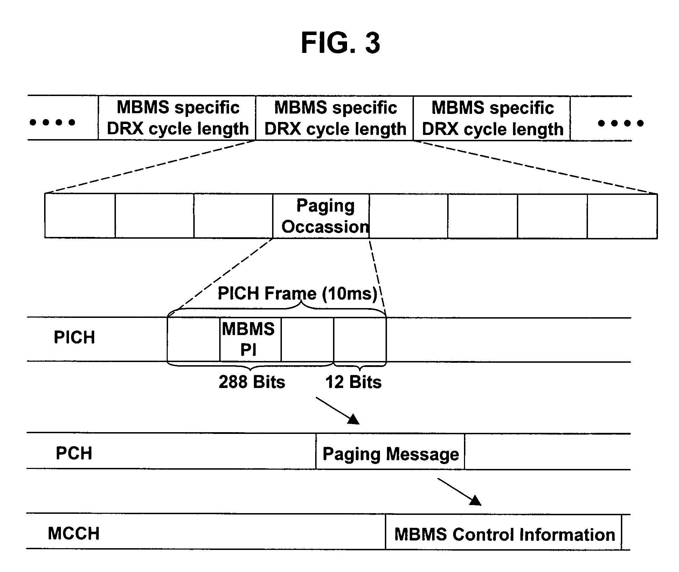

Figure 3 explains the first related art technique for a MBMS UE to receive the PICH. In the first related art technique, a MBMS UE that has joined a particular MBMS service wakes up once at each MBMS specific DRX cycle length, and receives a MBMS PI transmitted by the 288 bits in the front portion of the 10 ms PICH frame. Thus, in the first related art technique, the DRX cycle length is defined as the MBMS specific DRX cycle length for MBMS service, and the PICH is defined to transmit the MBMS PI by using the 288 bits of the front portion of the PICH frame. The PICH that is employed in the first related art technique is physically equivalent to the previously described UE PICH, but is different in that its purpose is to transmit a MBMS PI. For this reason, when a MBMS PI and a UE specific PI are transmitted together, the portion in which the MBMS PI is transmitted and the portion in which the UE specific PI is transmitted may overlap.

Referring to Figure 3, the MBMS UE receives the MBMS PI through the 288 bits of the front portion of the PICH frame. If this received MBMS PI indicates that a paging message should be received, the MBMS UE receives the PCH and receives the corresponding paging message. If the MBMS service ID included in the received paging message indicates the MBMS service to which it has subscribed to, the MBMS UE receives the MCCH to receive the MBMS control information. The MBMS control information includes MBMS related RRC messages, such as MBMS RB information.

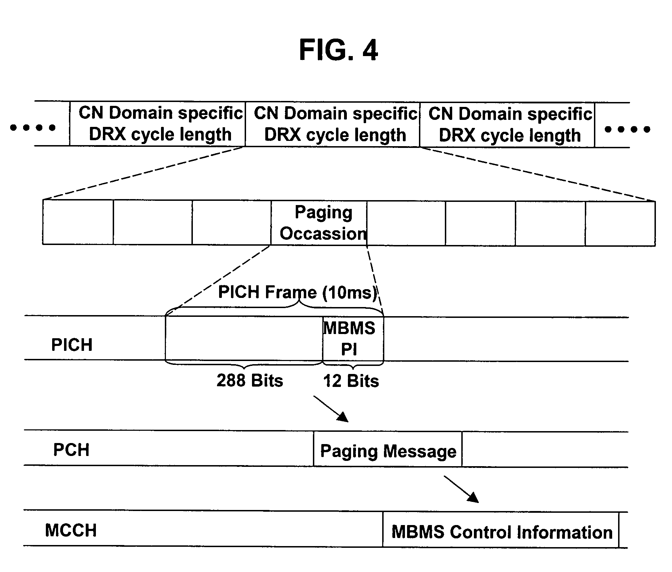

Figure 4 explains the second related art technique for a MBMS UE to receive the PICH. In the second related art technique, a MBMS UE that has joined a particular MBMS service wakes up once at each UE specific DRX cycle length, namely, a CN domain specific DRX cycle length or UTRAN specific DRX cycle length, and receives a MBMS PI transmitted as the 12 bits in the rear portion of the 10 ms PICH frame.

Thus, in the second related art technique, the DRX cycle length is defined as the CN domain specific DRX cycle length for the MBMS UEs in idle state, and is defined as the UTRAN specific DRX cycle length for the MBMS UEs in URA_PCH state or CELL_PCH state. Also, the PICH is defined as a new PICH called a "MBMS PICH" that transmits the MBMS PI using the 12 bits of the rear portion of the PICH frame.

In Figure 4, it is assumed that the MBMS UE is in idle mode state. As shown in Figure 4, the MBMS UE receives the MBMS PI (i.e., the 12 bits in the rear portion of the PICH frame) via the MBMS PICH. If the received MBMS PI indicates that the MCCH should be received, the MBMS UE receives the MCCH to receive MBMS control information. The MBMS control information includes MBMS related RRC messages, such as MBMS RB information.

However, the inventors of the present invention recognized the following problems of the related art techniques.

The first related art MBMS PI transmission technique employs the 288 bits of the front portion of the PICH frame to transmit the MBMS PI, but the related art UE specific paging technique also employs the 288 bits of the front portion of the PICH frame to transmit the UE specific PI. Thus, there is a problem in that the UE receiving the UE specific paging may mistakenly recognize a MBMS PI to be a UE specific PI. A UE that mistakenly interprets the MBMS PI to be a UE specific PI would receive a paging message via the paging channel, thus the UE power will be unnecessarily consumed.

In the second related art MBMS PI transmission technique, before receiving the MCCH, the MBMS UE cannot determine whether or not the MBMS PI is for MBMS that it subscribed to. Thus, even when there is no MBMS control information for the MBMS that the UE has subscribed to, the UE must receive the MCCH, which results in a waste of radio resources. When the number of MBMS services provided to the corresponding cell is high, and when MBMS control information is frequently transmitted, this problem becomes much more serious.

As a result, the first and second related art techniques require the UEs in sleep mode to perform unnecessary operations, resulting in the problem of unnecessarily consuming UE power.

The present invention prevents unnecessary UE power consumption and allows more efficient UE power usage, by providing a method and apparatus of paging for a terminal that has joined a particular point-to-multipoint (p-t-m) service, the method comprising, periodically monitoring a point-to-point (p-t-p) paging indication on a first channel for each p-t-p service paging cycle, periodically monitoring a point-to-multipoint (p-t-m) paging indication on a second channel for each p-t-m service paging cycle, and decoding the first and second channels at different time intervals with the same channel code to receive the p-t-p paging indication and the p-t-m paging indication.

Also, the present invention provides a method and apparatus of paging for a network capable of providing a point-to-multipoint (p-t-m) service, comprising, time multiplexing a first channel and a second channel at different time intervals within one frame using the same channel code, transmitting a point-to-point (p-t-p) paging indication on the first channel for each p-t-p service paging cycle, and transmitting a point-to-multipoint (p-t-m) paging indication on the second channel for each p-t-m service paging cycle.

### BRIEF DESCRIPTION OF THE DRAWINGS

The features and advantages of the present invention will become more apparent from the following detailed description of the non-limiting exemplary embodiment(s) of the invention taken in conjunction with the drawings.
Figure 1 depicts a typical UMTS network architecture.
Figure 2 depicts a radio interface protocol architecture between based upon a 3GPP radio access network specification between the UE and the UTRAN.
Figure 3 explains the first related art technique for a MBMS UE to receive the PICH.
Figure 4 explains the second related art technique for a MBMS UE to receive the PICH.
Figure 5 depicts a structure of a paging indicator channel (PICH) according to an embodiment of the present invention.
Figure 6 depicts a method of receiving the PICH according to an embodiment of the present invention.
Figure 7 depicts the discontinuous reception procedure of an MBMS UE according to an embodiment of the present invention.
Figure 8 depicts a communications system structure including a terminal (UE) and a network (UTRAN) according to an embodiment of the present invention.
Figure 9 depicts a terminal (UE) structure according to an embodiment of the present invention.

### DETAILED DESCRIPTION

The present invention may be better understood by considering the following additional explanation in view of the related art.

The paging indicator channel (PICH) is used for receiving dedicated paging information, and a UE (terminal) receives the PICH at a particular time and reads certain bits (i.e., the paging indicator (PI) corresponding to that UE) in the 288 bit portion of a PICH frame. The total number of bits for the PI depends upon the mapping method that is used. A single PI is assigned to a single UE, which periodically reads that PI. Here, the UE reads its PI in units of cycles, each cycle containing a plurality of frames. For example, a UE may read its PI at every UE specific DRX cycle. Namely, the UE would read one frame that corresponds to that UE for each UE specific DRX cycle, and this is also know as a paging occasion.

In order to handle point-to-multipoint (p-t-m) services in a communications system, e.g., providing multimedia broadcast and multicast (MBMS) data, a paging indicator channel for MBMS (the so-called MBMS PICH or "MICH") is employed in addition to using the PICH. When using the MICH, there are two techniques. The first is using a UE specific DRX cycle (as used when employing the PICH), such that the MICH is read in a manner similar to how the PICH is read. The second is using a MBMS specific DRX cycle, instead of the UE specific DRX cycle.

Each of the above two techniques require multiplexing, of which there are two kinds: code multiplexing and time multiplexing.

In code multiplexing, the MICH and PICH are transmitted (and read) by using respectively different codes. For the MICH, any part of the MICH frame can be used to insert a required notification indicator (NI), namely the MBMS PI. For the PICH, the front portion (288 bits) of the PICH frame is used to insert the required notification indicator (NI), namely, the UE specific PI.

In time multiplexing, the MICH and PICH are transmitted (and read) at different times. Time multiplexing using the UE specific DRX cycle corresponds to the second related art technique (explained previously). In time multiplexing using the MBMS specific DRX cycle, the used portion (288 bits) within a single PICH frame can be used for the MICH. This type of time multiplexing which employs the used portion of the PICH frame corresponds to the first related art technique (explained previously).

In contrast, the present invention pertains to time multiplexing (based upon a MBMS specific DRX cycle) which employs the unused portion (12 bits) of the PICH frame, unlike the related art techniques.

Here, the concept of the so-called "false alarm" situation (e.g., erroneously reading a MBMS PI to be a UE specific PI) should be considered. Namely, among the above explained code multiplexing and time multiplexing methods, code multiplexing has the least occurrence of false alarms, because separate codes are used for the MICH and PICH.

Time multiplexing employing the MBMS specific DRX cycle and using the used part (288 bits) of the PICH frame (i.e., the first related art method) has the greatest occurrence of false alarms, because the location of the UE specific PI and MBMS PI may overlap within the used part of the PICH frame.

Time multiplexing employing the UE specific DRX cycle (i.e., the second related art) has the second most occurrence of false alarms, thus causing unnecessary reading of the MCCH, as explained previously.

In contrast, the present invention with time multiplexing employing the MBMS specific DRX cycle and using the unused part (12 bits) of the PICH frame has the third most occurrence of false alarms, which is an improvement over the first and second related art techniques.

In particular, when comparing the second related art technique with the present invention, the second related art is disadvantageous in that, from the point of view of the communications system, the same PI (or NI) is sent repeatedly within a single UE specific DRX cycle (regardless of the particular MBMS service). Such repeated sending of the same PI (or NI) does not occur in the present invention, because each PI (or NI) is sent within a single MBMS specific DRX cycle according to its particular MBMS service. For example, a first MBMS PI for a first MBMS service may be sent every two cycles, while a second MBMS PI for a second MBMS service may be sent every three cycles.

Hereafter, the present invention will now be explained in more detail.

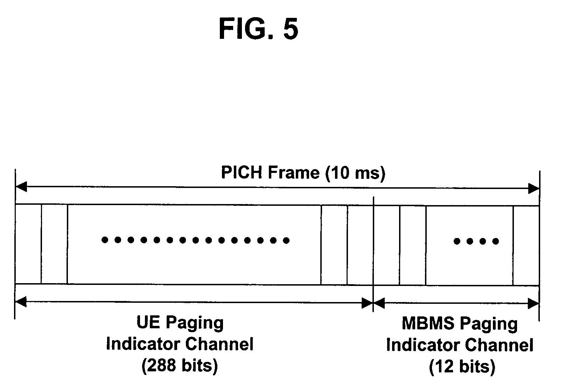

Figure 5 depicts a structure of a paging indicator channel (PICH) according to an embodiment of the present invention. The PICH according to the present invention is divided into a UE PICH and a MBMS PICH. The UE PICH, as previously described, is equivalent to the related art UE PICH used for transmitting a UE specific PI. The UE PICH is used to indicate that a particular UE should receive the PCH, and one or more UE specific PIs are transmitted.

In Figure 5, the MBMS PICH is used to indicate that one or more UEs (that wish to receive a particular MBMS service) should receive the MCCH, and one or two (or more) MBMS PIs are transmitted. The MBMS PICH is transmitted by using the related art unused part of the PICH frame. Depending on whether the MBMS PI value is 1 or 0, the UE must determine whether the MCCH should be received for a particular MBMS service. The UTRAN can repeatedly transmit the PICH frame every 10 ms.

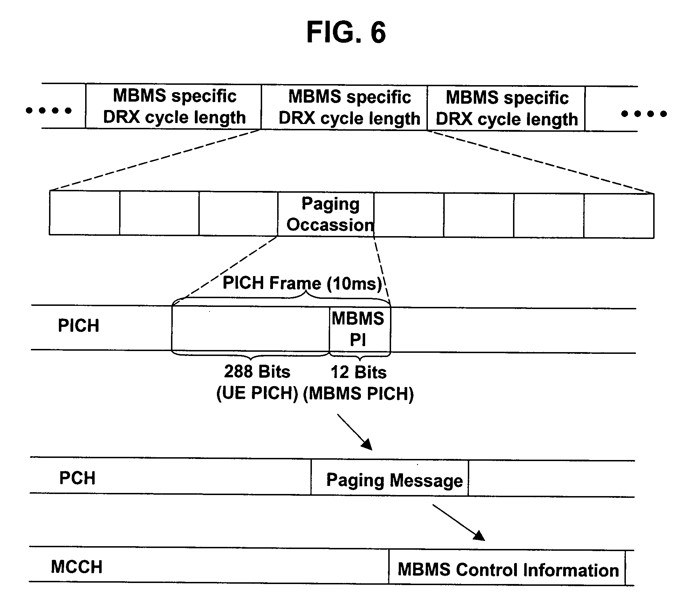

Figure 6 depicts a method of receiving the PICH according to an embodiment of the present invention. In the present invention, a MBMS UE that has joined a particular MBMS service wakes up once every MBMS specific DRX cycle length and receives the MBMS PI transmitted via the MBMS PICH, namely, the 12 bits in the rear (unused) portion of the 10 ms PICH frame. The MBMS specific DRX cycle length can be defined as a DRX cycle length that is commonly used by all MBMS services or as respectively different DRX cycle length values used for each particular MBMS service. If respectively different values are used for the MBMS specific DRX cycle length for each particular service, the UE must use the MBMS specific DRX cycle length for the MBMS service it has joined.

As shown in Figure 6, a single MBMS specific DRX cycle length is divided into more than one PICH frames, namely, more than one paging occasions. Among the more than one paging occasions, the MBMS UE can only receive the paging occasion indicated by the ID of the MBMS service that it joined. As described above, a single paging occasion (namely, a single PICH frame) is divided into a UE PICH portion and a MBMS PICH portion. The MBMS UE receives the MBMS PI that the MBMS PICH transmits and determines whether or not the MCCH should be received.

If the MBMS PI received via the MBMS PICH (i.e., the rear 12 bits of the PICH frame) indicates that the MCCH should be received, the MBMS UE receives the MCCH to receive MBMS control information. If the MBMS PI received via the MBMS PICH does not indicate that the MCCH should be received, the MBMS UE does not receive the MCCH, and the MBMS PI is received at the next MBMS specific DRX cycle length. The MBMS control information transmitted via the MCCH includes MBMS related RRC messages, such as MBMS RB information.

According to another embodiment of the present invention, the MBMS UE receives the MBMS PI transmitted by the MBMS PICH, and determines whether or not to receive the PCH. If the MBMS PI received via the MBMS PICH (i.e., the rear 12 bits of the PICH frame) indicates that the PCH should be received, the MBMS UE receives the PCH to obtain MBMS service ID. In contrast, if the MBMS PI received via the MBMS PICH does not indicate that the PCH should be received, the MBMS UE does not receive the PCH, and the MBMS PI is received at the next MBMS specific DRX cycle length.

If the MBMS service ID (obtained by the MBMS UE upon receiving the PCH) indicates a particular MBMS service that the MBMS UE has joined, then the MBMS UE receives MBMS control information via the MCCH. In contrast, if the MBMS service ID (obtained by the MBMS UE upon receiving the PCH) does not indicate a particular MBMS service that the MBMS UE has joined, then the MBMS UE does not receive the MCCH, and the MBMS PI is received at the next MBMS specific DRX cycle length.

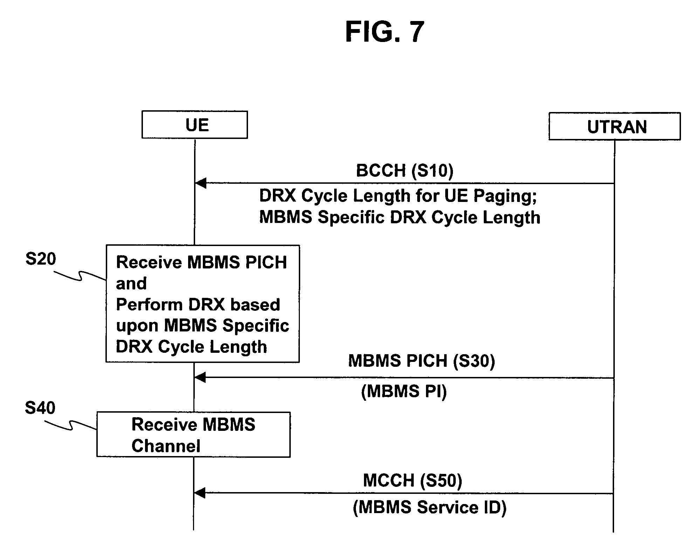

Figure 7 depicts the discontinuous reception (DRX) procedure of an MBMS UE according to an embodiment of the present invention.

In the first step (S10), the UTRAN employs respectively different parameters for the MBMS specific DRX cycle length value and the DRX cycle length value for UE paging (i.e., for receiving the UE PICH), and transmits these to one or more UEs located in one cell. Here, these parameters are broadcast via a logical channel, i.e., the BCCH (broadcast control channel).

In the second step (S20), the UE receives the MBMS PICH. Here, the UE applies the MBMS specific DRX cycle length value to discontinuously receive the MBMS PICH. Also, the UE applies the DRX cycle length value to discontinuously receive the UE PICH.

In the third step (S30), the UE uses the obtained MBMS specific DRX cycle length to receive the MBMS PI that is indicated by the ID of the MBMS service that it has joined.

In the fourth step (S40), if the received MBMS PI indicates that the MCCH should be received, the UE begins to receive a logical channel, i.e., the MCCH, and proceeds to the fifth step (explained hereafter). In contrast, if the received MBMS PI does not indicate that the MCCH should be received, the procedure returns to third step. Namely, the UE waits to receive the MBMS PI during the next MBMS specific DRX cycle length.

In the fifth step (S50), the UE receives the MBMS service ID via the MCCH, and if the received MBMS service ID corresponds to the MBMS service that it has joined, then the corresponding MBMS control information is received.

As described above, in order to solve the problems of unnecessarily consuming UE power due to inefficient UE operations, the present invention allows the system to transmit upon performing time multiplexing during respectively different time domains for the UE PICH and MBMS PICH, and a UE wishing to receive a particular MBMS service receives the MBMS PICH at each MBMS specific DRX cycle length in order to determine whether to receive the MBMS control channel. By doing so, the present invention can optimize the power usage for the UE.

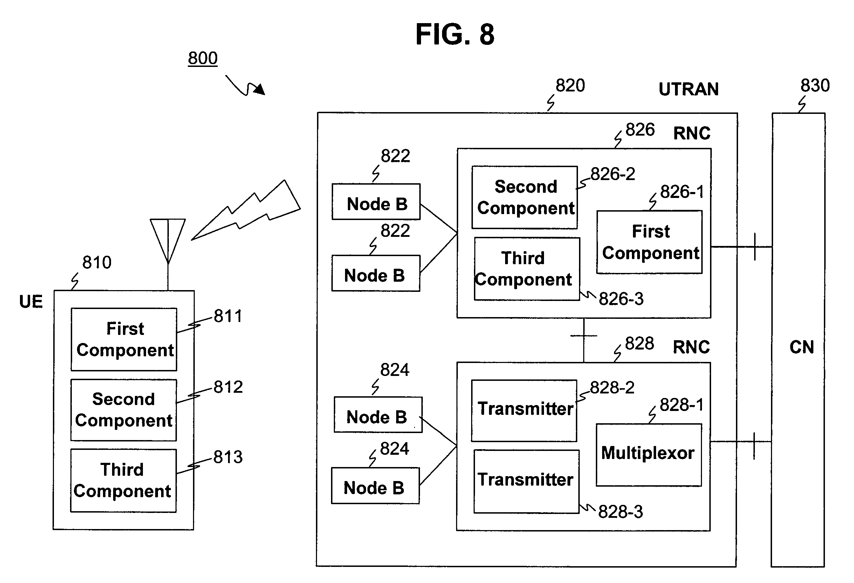

Figure 8 depicts a communication system comprising a terminal (UE 810) in radio communication with a network (UTRAN 820 and CN 830) according to an embodiment of the present invention. The network (UTRAN 820 and CN 830) may include various hardware and software components. For example, the UTRAN 820 comprises an RNC (826), being connected to a plurality of Node Bs (822), and having a first component (826-1), a second component (826-2), and a third component (826-3). An RNC (828), being connected to a plurality of Node Bs (824), may also comprise a multiplexer (828-1) and transmitters (828-2, 828-3). The RNCs (826, 828) are connected with one another via an interface, and connected with the CN (830) via another interface. The network (UTRAN 820 and CN 830) handles various signal processing procedures for communication with the terminal (UE 810) to be described in more detail hereafter. Here, it should be noted that various software codes and protocols that are required for achieving the present invention may be stored in one or more memory devices and executed by one or more processors located within the Node Bs (822, 824), the RNCs (826, 828), and/or other network elements.

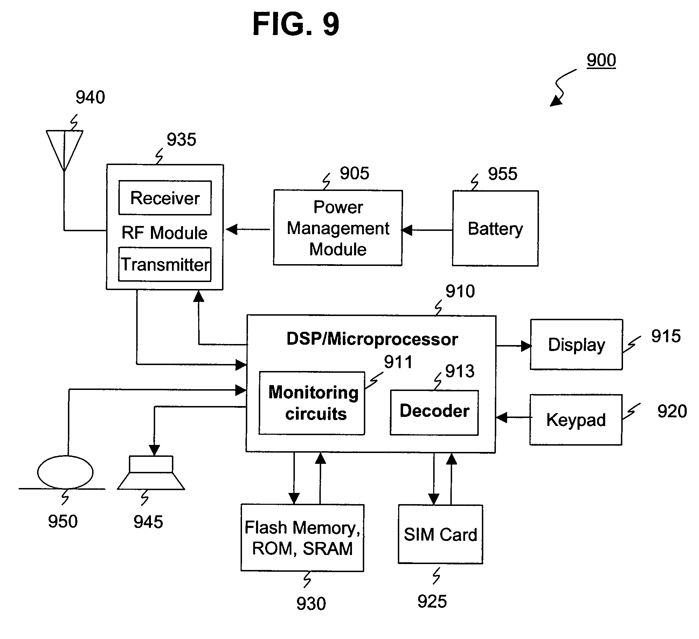

Figure 9 depicts the structure of a terminal (UE 900) according to an embodiment of the present invention. The terminal (UE 900) may include various hardware and software components. For example, there are processing circuits and memory devices, such as, a DSP/Microprocessor (910) having monitoring circuits (911) and a decoder (913), a Flash memory, ROM, SRAM (930), and a SIM card (925). Also, there is a transceiver section including a battery (955), a power management module (905), a RF module (935) having a receiver and a transmitter, and an antenna (940). Additionally, there are input and output components, such as a display (915), a keypad (920), a speaker (945), and a microphone (950). The terminal (UE 900) handles various signal processing procedures for communication with the network (for example, the network in Fig. 8) to be described in more detail hereafter. Here, it should be noted that various software codes and protocols that are required for achieving the present invention may be stored in one or more memory devices and executed by one or more processors within the terminal (UE 900).

The present invention provides a method of paging for a terminal that has joined a particular point-to-multipoint (p-t-m) service, the method comprising: periodically monitoring a point-to-point (p-t-p) paging indication on a first channel for each p-t-p service paging cycle; periodically monitoring a point-to-multipoint (p-t-m) paging indication on a second channel for each p-t-m service paging cycle; and decoding the first and second channels at different time intervals with the same channel code to receive the p-t-p paging indication and the p-t-m paging indication.

In the above method, preferably, the p-t-p paging indication is for the terminal, and the p-t-m paging indication is for the p-t-m service that the terminal has joined. Preferably, the first and second channels are time multiplexed at different time intervals within one frame using the same channel code. Preferably, if the p-t-m paging indication indicates the p-t-m service, then receiving a multimedia broadcast multicast service (MBMS) control channel (MCCH) for a corresponding time. Preferably, the time interval for the second channel employs an unused part of a paging indicator channel (PICH) frame.

To implement the above method, the present invention can employ various hardware and/or software components. For example, as shown in Figures 8 and 9, the terminal (810, 900) may include a first component (811) to monitor the p-t-p paging indication on a first channel, a second component (812) to monitor the p-t-m paging indication on a second channel, and a third component (813) to decode the first and second channels. Preferably, the first, second, and third components are part of the same hardware element (910). Preferably, the first and second components are monitoring circuits (911). Preferably, the third component is a decoder (913).

Also, the present invention provides a method of paging for a network capable of providing a point-to-multipoint (p-t-m) service, comprising: time multiplexing a first channel and a second channel at different time intervals within one frame using the same channel code; transmitting a point-to-point (p-t-p) paging indication on the first channel for each p-t-p service paging cycle; and transmitting a point-to-multipoint (p-t-m) paging indication on the second channel for each p-t-m service paging cycle.

In the above method, preferably, the p-t-p paging indication is for a terminal that has joined a particular point-to-multipoint (p-t-m) service, and the p-t-m paging indication is for a service that a terminal has joined. Preferably, the time interval for the second channel employs an unused part of a paging indicator channel (PICH) frame.

To implement the above method, the present invention can employ various hardware and/or software components. For example, as shown in Figures 8 and 9, the network (820) may include a first component (826-1) to time multiplex the first and second channels, a second component (826-2) to transmit p-t-p paging indication, and a third component (826-3) to transmit the p-t-m paging indication. Preferably, the p-t-p paging indication is for a terminal that has joined a particular point-to-multipoint (p-t-m) service, and the p-t-m paging indication is for a service that a terminal has joined. Preferably, the time interval for the second channel employs an unused part of a paging indicator channel (PICH) frame. Preferably, the first, second, and third components are part of a radio network controller (RNC 826). Preferably, the first component is a multiplexor (828-1). Preferably, the second and third components are transmitters (828-2, 828-3).

Additionally, the present invention provides a method of paging for a communications system, comprising: time multiplexing a first channel and a second channel at different time intervals within one frame using the same channel code; transmitting a point-to-point (p-t-p) paging indication on the first channel for each p-t-p service paging cycle; transmitting a point-to-multipoint (p-t-m) paging indication on the second channel for each p-t-m service paging cycle; periodically monitoring the p-t-p paging indication on the first channel for each p-t-p service paging cycle; periodically monitoring the p-t-m paging indication on the second channel for each p-t-m service paging cycle; and decoding the first and second channels at different time intervals with the same channel code to receive the p-t-p paging indication and the p-t-m paging indication.

In the above method, preferably, the p-t-p paging indication is for a terminal that has joined a particular point-to-multipoint (p-t-m) service, and the p-t-m paging indication is for a service that a terminal has joined. Preferably, the time interval for the second channel employs an unused part of a paging indicator channel (PICH) frame.

To implement the above method, the present invention can employ various hardware and/or software components. For example, as shown in Figures 8 and 9, the communications system (800) may include a network (820) and a terminal (810, 900). Preferably, the network may include a first component (826-1) to time multiplex the first and second channels, a second component (826-2) to transmit p-t-p paging indication, and a third component (826-3) to transmit the p-t-m paging indication. Preferably, the terminal may include a first component (811) to monitor the p-t-p paging indication, a second component (812) to monitor the p-t-m paging indication, and a third component (813) to decode the first and second channels.

The present invention has thus far been described as being implemented in a W-CDMA mobile communications system. However, the present invention may also be adapted and implemented in various communications systems operating under other types of communications.

Also, it should be noted that the so-called UE paging indicator (PI) and MBMS paging indicator (PI) are also referred to as a notification indicator (NI), although the actually agreed upon name of this indicator has yet to be finalized. As such, those skilled in the art will understand that various other names may be used when referring to the indicator used for paging and notification.

This specification describes various illustrative embodiments of the present invention. The scope of the claims is intended to cover various modifications and equivalent arrangements of the illustrative embodiments disclosed in the specification. Therefore, the following claims should be accorded the reasonably broadest interpretation to cover modifications, equivalent structures, and features that are consistent with the spirit and scope of the invention disclosed herein.

## Claims

1. A method of paging for a terminal that has joined a particular point-to-multipoint (p-t-m) service, the method comprising:
periodically monitoring a point-to-point (p-t-p) paging indication on a first channel for each p-t-p service paging cycle;
periodically monitoring a point-to-multipoint (p-t-m) paging indication on a second channel for each p-t-m service paging cycle; and
decoding the first and second channels at different time intervals with the same channel code to receive the p-t-p paging indication and the p-t-m paging indication,
wherein an unused part of a paging indicator channel (PICH) frame is used for a time interval for the second channel.

2. The method of claim 1, wherein the p-t-p paging indication is for the terminal.

3. The method of claim 1, wherein the p-t-m paging indication is for the p-t-m service that the terminal has joined.

4. The method of claim 1, wherein the first and second channels are time multiplexed at different time intervals within one frame using the same channel code.

5. The method of claim 1, further comprising:
if the p-t-m paging indication indicates the p-t-m service, then receiving a multimedia broadcast multicast service (MBMS) control channel (MCCH) for a corresponding time.

6. The method of claim 1, wherein the p-t-m paging indication is monitored in accordance with a frame in the p-t-m service paging cycle that depends upon a particular type of p-t-m service.

7. A method of paging for a network capable of providing a point-to-multipoint (p-t-m) service, comprising:
time multiplexing a first channel and a second channel at different time intervals within one frame using the same channel code;
transmitting a point-to-point (p-t-p) paging indication on the first channel for each p-t-p service paging cycle; and
transmitting a point-to-multipoint (p-t-m) paging indication on the second channel for each p-t-m service paging cycle,
wherein an unused part of a paging indicator channel (PICH) frame is used for a time interval for the second channel.

8. The method of claim 7, wherein the p-t-p paging indication is for a terminal that has joined a particular point-to-multipoint (p-t-m) service.

9. The method of claim 7, wherein the p-t-m paging indication is for a service that a terminal has joined.

10. The method of claim 7, wherein the p-t-m paging indication is transmitted in accordance with a frame in the p-t-m service paging cycle that depends upon a particular type of p-t-m service.

11. A method of paging for a communications system, comprising:
time multiplexing a first channel and a second channel at different time intervals within one frame using the same channel code;
transmitting a point-to-point (p-t-p) paging indication on the first channel for each p-t-p service paging cycle;
transmitting a point-to-multipoint (p-t-m) paging indication on the second channel for each p-t-m service paging cycle;
periodically monitoring the p-t-p paging indication on the first channel for each p-t-p service paging cycle;
periodically monitoring the p-t-m paging indication on the second channel for each p-t-m service paging cycle; and
decoding the first and second channels at different time intervals with the same channel code to receive the p-t-p paging indication and the p-t-m paging indication,
wherein an unused part of a paging indicator channel (PICH) frame is used for a time interval for the second channel.

12. The method of claim 11, wherein the p-t-p paging indication is for a terminal that has joined a particular point-to-multipoint (p-t-m) service.

13. The method of claim 11, wherein the p-t-m paging indication is for a service that a terminal has joined.

14. The method of claim 11, wherein the p-t-m paging indication is transmitted and monitored in accordance with a frame in the p-t-m service paging cycle that depends upon a particular type of p-t-m service.

15. A terminal, comprising:
a first component to periodically monitor a point-to-point (p-t-p) paging indication on a first channel for each p-t-p service paging cycle;
a second component to periodically monitor a point-to-multipoint (p-t-m) paging indication on a second channel for each p-t-m service paging cycle; and
a third component to decode the first and second channels at different time intervals with the same channel code to receive the p-t-p paging indication and the p-t-m paging indication,
wherein the second component uses an unused part of a paging indicator channel (PICH) frame for a time interval of the second channel.

16. The terminal of claim 15, wherein the terminal has joined a particular point-to-multipoint (p-t-m) service.

17. The terminal of claim 15, wherein the p-t-m paging indication is for the service that the terminal has joined.

18. The terminal of claim 15, wherein the first and second channels are time multiplexed at different time intervals within one frame using the same channel code.

19. The terminal of claim 15, further comprising:
if the p-t-m paging indication indicates the p-t-m service, then receiving a multimedia broadcast multicast service (MBMS) control channel (MCCH) for a corresponding time.

20. The terminal of claim 15, wherein the second component monitors the p-t-m paging indication in accordance with a frame in the p-t-m service paging cycle that depends upon a particular type of p-t-m service.

21. The terminal of claim 15, wherein the first, second, and third components are part of the same hardware element.

22. The terminal of claim 15, wherein the first and second components are monitoring circuits.

23. The terminal of claim 15, wherein the third component is a decoder.

24. A network capable of providing a point-to-multipoint (p-t-m) service, the network comprising:
a first component to time multiplex a first channel and a second channel at different time intervals within one frame using the same channel code;
a second component to transmit a point-to-point (p-t-p) paging indication on the first channel for each p-t-p service paging cycle; and
a third component to transmit a point-to-multipoint (p-t-m) paging indication on the second channel for each p-t-m service paging cycle,
wherein the third component uses an unused part of a paging indicator channel (PICH) frame for a time interval of the second channel.

25. The network of claim 24, wherein the p-t-p paging indication is for a terminal that has joined a particular point-to-multipoint (p-t-m) service.

26. The network of claim 24, wherein the p-t-m paging indication is for a service that a terminal has joined.

27. The network of claim 24, wherein the third component transmits the p-t-m paging indication in accordance with a frame in the p-t-m service paging cycle that depends upon a particular type of p-t-m service.

28. The network of claim 24, wherein the first, second, and third components are part of a radio network controller (RNC).

29. The network of claim 24, wherein the first component is a multiplexor.

30. The network of claim 24, wherein the second and third components are transmitters.

31. A communications system, comprising:
a network comprising,
a first component to time multiplex a first channel and a second channel at different time intervals within one frame using the same channel code;
a second component to transmit a point-to-point (p-t-p) paging indication on the first channel for each p-t-p service paging cycle; and
a third component to transmit a point-to-multipoint (p-t-m) paging indication on the second channel for each p-t-m service paging cycle,
wherein the third component uses an unused part of a paging indicator channel (PICH) frame for a time interval of the second channel, and a terminal connected with the network, the terminal comprising,
a first component to periodically monitor the p-t-p paging indication on the first channel for each p-t-p service paging cycle;
a second component to periodically monitor the p-t-m paging indication on the second channel for each p-t-m service paging cycle; and
a third component to decode the first and second channels at different time intervals with the same channel code to receive the p-t-p paging indication and the p-t-m paging indication,
wherein the second component uses an unused part of a paging indicator channel (PICH) frame for a time interval of the second channel.

32. The system of claim 31, wherein the p-t-p paging indication is for the terminal that has joined a particular point-to-multipoint (p-t-m) service.

33. The system of claim 31, wherein the p-t-m paging indication is for a service that the terminal has joined.

34. The system of claim 31, wherein the third component of the network transmits the p-t-m paging indication in accordance with a frame in the p-t-m service paging cycle that depends upon a particular type of p-t-m service, and the second component of the terminal monitors the p-t-m paging indication in accordance with a frame in the p-t-m service paging cycle that depends upon a particular type of p-t-m service.
